(19) Europäisches Patentamt
European Patent Office
Office européen des brevets

(11) **EP 4 488 050 A1**

(12) **EUROPEAN PATENT APPLICATION**
published in accordance with Art. 153(4) EPC

(43) Date of publication:
08.01.2025 Bulletin 2025/02

(21) Application number: 23763592.5

(22) Date of filing: 03.03.2023

(51) International Patent Classification (IPC):
*B32B 3/12* (2006.01)   *B29C 70/18* (2006.01)
*B32B 5/28* (2006.01)   *B64C 1/00* (2006.01)
*B64G 1/22* (2006.01)

(52) Cooperative Patent Classification (CPC):
B29C 70/18; B32B 3/12; B32B 5/28; B64C 1/00;
B64G 1/22

(86) International application number:
PCT/JP2023/008191

(87) International publication number:
WO 2023/167335 (07.09.2023 Gazette 2023/36)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 03.03.2022 JP 2022032417
03.03.2022 JP 2022032418

(71) Applicant: Toray Industries, Inc.
Tokyo 103-8666 (JP)

(72) Inventors:
• ARAI, Atsuhito
  Otsu-shi, Shiga 520-8558 (JP)
• HONMA, Masato
  Iyo-gun, Ehime 791-3193 (JP)
• FUJIOKA, Takashi
  Iyo-gun, Ehime 791-3193 (JP)

(74) Representative: Kador & Partner Part mbB
Corneliusstraße 15
80469 München (DE)

(54) **CORE MATERIAL, SKIN-CORE STRUCTURE, AIRCRAFT MOVING BLADE, AIRCRAFT FLOOR PANEL, ROCKET FAIRING, AND ROCKET INTERSTAGE PORTION**

(57) Provided is a core material that may be smoothly produced as a result of improvements in the texture and strength of the base material thereby having excellent light weight property and strength. The present invention is a core material having a structure including a collective body of hollow columnar cells compartmentally formed by cell walls. The cell walls include a sheet material in which discontinuous reinforcing fibers (Cf) are dispersed in a form of monofilament.

FIG.1

**Description**

Field

The present invention relates to a core material provided with both light weight and mechanical properties, and to a skin-core structural body using the same. Background

A skin-core structural body using a core material that has a structure composed of a collective body of hollow columnar cells divided by cell walls and that is bonded to a skin material is widely used in a structural body, a construction material, and the like, in an aircraft, a marine ship, and so forth, because of its light weight and excellent mechanical properties such as a high rigidity. Illustrative examples of the core material as described above include an aluminum honeycomb core formed of aluminum foil and a FRP honeycomb core formed of reinforcing fibers and a matrix resin. In particular, in flying vehicles such as an aircraft, in which a light weight is strongly demanded, from the viewpoints of weight reduction and excellent mechanical properties, an aramid honeycomb core that is formed of a nonwoven cloth of aramid fibers impregnated with a phenol resin is mainly used.

An aramid sheet, which is the base material of the aramid honeycomb described in Patent Literature 1, contains and is composed of 0% to 50% by weight of a binder and 50% to 100% by weight of a para-aramid fiber. In the aramid honeycomb having a reinforcing resin attached and impregnated at a post-treatment process, the para-aramid fiber is finally contained with a weight ratio of 20% to 80%. The aramid honeycomb like this had the disadvantage that the aramid sheet was poor in its texture. In other words, a large amount of the fiber, i.e., the para-aramid fiber with the content of 50% or more, tends to be bulky in handling. Therefore, when performing papermaking of the aramid to the aramid sheet, it is difficult to agitate the aramid uniformly in water or other paper-making liquid, so that it is difficult to obtain the aramid in a well dispersed state on a filter. Therefore, the resulting aramid sheet is poor in its texture, such as poor dispersion and uneven and varied paper density in the para-aramid fiber. In addition, water retention and water filtration degree are poor, so that the fixation degree of a binder that is mixed in the paper-making solution, such as water, is low during the time of papermaking. There has also been a problem in the paper strength of the aramid sheet, because the binder flows off from the para-aramid fibers without being fixed to or composited with the para-aramid fibers. This has been resulted in wrinkling between the area where the amount of para-aramid fiber is more and the area where the amount of para-aramid fiber is fewer, thereby occasionally causing troubles in production of the aramid honeycomb, such as poor handling and formation of a large pinhole through which the adhesive goes through to the back at the time of producing the honeycomb. In addition, the aramid fiber readily absorbs moisture, which occasionally causes a problem of a change in mechanical properties over time.

Citation List

Patent Literature

Patent Literature 1: Japanese Patent Application Laid-open No. H04-226745 Summary

Technical Problem

In view of these circumstances, an object of the present invention is to provide a core material that may be smoothly produced as a result of improvements in the texture and strength of the base material, thereby providing the core material having excellent light weight property and mechanical strength.

Solution to Problem

The present invention to solve the problem described above is a core material having a structure including a collective body of hollow columnar cells compartmentally formed by cell walls. The cell walls include a sheet material in which discontinuous reinforcing fibers (Cf) are dispersed in a monofilament form.

In addition, according to the present invention, provided is a skin-core structural body formed by bonding a skin material including a fiber-reinforced composite material to a core open surface of the above-mentioned core material.

Advantageous Effects of Invention

According to the present invention, a core material and a skin-core structural body that satisfy both a light weight property and mechanical properties may be obtained.

Brief Description of Drawings

FIG. 1 is a schematic diagram illustrating one example of a dispersion state of reinforcing fibers in a sheet material of a core material according to the present invention.
FIG. 2 is a schematic diagram illustrating one example of a burning-off jig for measurement of a two-dimensional orientation angle of a sheet material.
FIG. 3 is a schematic diagram illustrating one example of production equipment of a paper base material.
FIG. 4 is a schematic diagram illustrating one embodiment of a skin-core structural body according to the present invention.
FIG. 5 is a schematic diagram illustrating one example of an average fiber orientation angle of reinforcing fibers (Cf) in an in-plane direction of a cell wall according to the present invention.
FIG. 6 is a schematic diagram illustrating the state how a part of discontinuous fibers (Cf) contained in the cell wall of the core material penetrates into a skin material.

Description of Embodiments

<Core Material>

Hereinafter, the core material according to the present invention will be described with referring to the drawings as appropriate, but the present invention is not limited to these drawings. However, as it is readily understood by a person ordinarily skilled in the art, the description of the embodiments illustrated in the drawings may also serve as the description of the core material according to the present invention as a superordinate concept.

The core material according to the present invention has a structure including a collective body of hollow columnar cells that are compartmentally formed by a cell wall. The cell shape of the core material is not particularly limited to polygons such as a triangle, a quadrilateral, and a hexagon, as well as to a circle and an oval; but from the viewpoint of an impact resistance, a regular hexagonal honeycomb core is preferable. When the cell shape is a regular hexagon, a regular hexagon having a side length of 3 mm to 20 mm is generally used; but from the viewpoint of the contact point with an adhesive, a regular hexagon having a side length of 3 mm to 10 mm is preferably used, and a side of 3 mm to 7 mm is more preferably used. Combining cell shapes of multiple types of polygons (cross-sectional shape perpendicular to the axial direction of the columnar cell) is also desirable because it allows an open surface to be made into a curved or a spherical shape with suppressing the variation in the properties inside the core material. Preferable examples of the combination of the polygonal shapes include a truncated icosahedron, which include a combination of a pentagon and a hexagon, and a curved shape using a part of it.

The core material according to the present invention may be produced, for example, by using a sheet material as the base material, with a known method such as a stretching method and a corrugating method. In the stretching method, a bonding material such as an adhesive is applied to the sheet material in strips, and multiple sheets are stacked in a positional relationship where the applied bonding material is displaced by half the pitch, and then the sheets are bonded or the like by pressing with heating, which is followed by pulling in the stacking direction to obtain the core material. In the corrugating method, the sheet material is first folded into a corrugated plate, and the resulting multiple corrugated plates are stacked in a block form with each valley and top in a positional relationship where they are displaced by half the pitch of the wave while interleaving a bonding material such as an adhesive, which is then followed by pressing with heating for bonding to obtain the core material.

The cell wall of the core material includes a sheet material in which a resin (Cr) is impregnated into a reinforcing fiber base material having discontinuous reinforcing fibers (Cf) dispersed in the form of a monofilament. Preferably, when all the cell walls that make up the core material are composed of the sheet material as described above, or when at least a part of the cell wall is composed of the sheet material as described above, the advantageous effects of the present invention may be obtained. The reinforcing fiber base material of the cell wall means a precursor having the reinforcing fibers processed into a form such as a sheet form, a fabric cloth form, or a web-like form. There is no particular restriction in the form or shape of the precursor as long as there are voids between the reinforcing fibers into which the resin is impregnated. For example, the reinforcing fiber may be mixed with an organic fiber, an organic compound, or an inorganic compound, or alternatively the reinforcing fibers may be cemented to each other by other component, or the reinforcing fiber may be bonded to the resin component. From the viewpoint of readily achieving the two-dimensional orientation of the reinforcing fibers according to the present invention, a preferable example of the form of the base material may be a nonwoven fabric form obtained by a dry method or a wet method, in which the reinforcing fibers are sufficiently opened and cemented to each other by an organic compound.

It is preferable that the reinforcing fiber base material used in the present invention has voids to be sufficiently impregnated with the resin component that will become a matrix, and for this reason, it is preferable to ensure an air permeability in the reinforcing fiber base material. The air permeability may be measured, for example, by the Gurley tester method in accordance with JIS P8117 (2009) or by the Frazir type method in accordance with ASTM D737 (2008). Among these, for the purpose of evaluating the material having a better air permeability, it is preferable to use the air volume ($cm^3/cm^2 \cdot s$) measured by the Frazir type method in accordance with ASTM D737 as a rough indication, in which the air volume is preferably 50 or more, more preferably 70 or more, and especially preferably 100 or more. Although there is no particular restriction in the upper limit of the air volume, in general, this may be 1000 or less, for example.

There is no particular restriction in the reinforcing fiber that may be used in the reinforcing fiber base material; so, illustrative examples thereof include a carbon fiber, a glass fiber, an aramid fiber, an alumina fiber, a silicon carbide fiber, a boron fiber, a metal fiber, a natural fiber, and a mineral fiber, in which these may be used singly, or two or more of these may be used together. From the viewpoint of increasing the economic performance of the resulting molded product, a glass fiber may be used preferably, and especially from the viewpoint of balancing the mechanical properties and the economic performance, it is preferable to use a carbon fiber together with a glass fiber. From the viewpoint of enhancing the shock absorption and the formability of the resulting molded product, an aramid fiber is preferably used, and especially from the viewpoint of balancing the mechanical properties and the shock absorption, it is preferable to use a carbon fiber and an aramid fiber together. From the viewpoint of increasing the conductivity of the resulting molded product, the reinforcing fiber that is covered with a metal such as nickel, copper, or ytterbium may also be used. Among them, from the viewpoint of high specific strength and specific rigidity as well as the weight reducing effect, and because of no problems associated with the moisture absorption, carbon fibers such as a PAN type, a pitch type, and a rayon type are preferably used.

It is preferable that the carbon fiber to be used in the present invention has the tensile modulus in the range of 200 to 600 GPa. The tensile modulus of the carbon fiber is affected by the crystallinity of the graphite structure that makes up the carbon fiber, in which the higher the crystallinity, the higher the elastic modulus. Also, the higher the crystallinity, the higher the conductivity. This range is preferable because the sheet material may be provided with a conductivity, a rigidity, and a strength in good balance each at a high level. The elastic modulus is more preferably in the range of 230 to 400 GPa, and still more preferably in the range of 260 to 370 GPa. Here, the tensile modulus of the reinforcing fiber is the value measured in accordance with JIS R7601-2006. Illustrative examples of the commercially available product of the carbon fiber include "TORAYCA (registered trade mark)" T800S-24K, "TORAYCA (registered trade mark)" T300-3K, "TORAYCA (registered trade mark)" M55J-6K, and "TORAYCA (registered trade mark)" T700S-12K (all manufactured by Toray Industries, Inc.).

It is important that the reinforcing fiber in the reinforcing fiber base material includes 0 to 50% by mass of the reinforcing fibers having a fiber length of more than 10 mm, 50 to 100% by mass of the reinforcing fibers having a fiber length of 2 to 10 mm, and 0 to 50% by mass of the reinforcing fibers having a fiber length of less than 2 mm. When the content of the reinforcing fibers having the fiber length of more than 10 mm is more than 50% by mass, the expansion in the thickness direction during the stacking process or the molding process may become significant, resulting in impairing of the handling properties thereof. When the content of the reinforcing fibers having the fiber length of less than 2 mm is more than 50% by mass, not only the mechanical properties of the resulting sheet material and core material may deteriorate, but also the sheet material may fail to ensure a sufficient strength, which occasionally results in impairing of the moldability of the core material. From these viewpoints, it is preferable that the reinforcing fibers include 80 to 100% by mass of the reinforcing fibers having a fiber length of 3 to 8 mm, and it is more preferable that the reinforcing fibers include the reinforcing fibers having at least two peaks in the fiber length distribution, one peak in the range of 5 to 10 mm and the other in the range of 2 to 5 mm in the fiber length. By setting the fiber length distribution within the more preferable range, it becomes possible to use, together with the reinforcing fibers that ensure the mechanical properties and the reinforcing fibers that ensure the handling property of the sheet material at the molding process of the core material, so that both properties may be readily satisfied compatibly. It is noted that the weight ratio of the reinforcing fibers represents the ratio of the number-average fiber length based on 100% as the reinforcing fibers.

The fiber length of the reinforcing fiber is measured, for example, by directly extracting the reinforcing fiber from the reinforcing fiber base material or by dissolving the resin in the sheet material using a solvent that dissolves only the resin followed by filtering out the remaining reinforcing fibers and then measuring the length thereof by means of a microscopic observation (dissolution method). In the case that there is no solvent that dissolves the resin, only the resin is burned off in a temperature range where the reinforcing fiber does not lose the weight thereof due to oxidation, which is followed by separating the reinforcing fiber and then measuring the length thereof by means of a microscopic observation (burn-off method). For the measurement, 400 reinforcing fibers are randomly selected and their lengths are measured with an optical microscope to a level of 1 um to determine the fiber length and the ratio thereof. When comparing the method of directly extracting the reinforcing fiber from the reinforcing fiber base material with the method of extracting the reinforcing fiber from the prepreg by the burn-off method or the dissolution method, there is no particular difference in the results when the results are obtained by properly selecting the conditions.

The orientation state of the reinforcing fibers may be expressed by a two-dimensional orientation angle. In general, the reinforcing fiber base material is often composed of bundles of the reinforcing fibers, so that it is difficult to ensure isotropy as the sheet material; thus, impregnation of the resin into the bundles may not be sufficient, which occasionally results in deterioration of the strength of the core material. Even when the reinforcing fiber bundles are dispersed into monofilaments, the same result may occur when the monofilaments of the reinforcing fiber contact with each other in parallel. Moreover, excessive fiber orientation in the thickness direction may cause an expansion in the thickness direction of the sheet material, which may significantly impair the handling property and moldability of the core material.

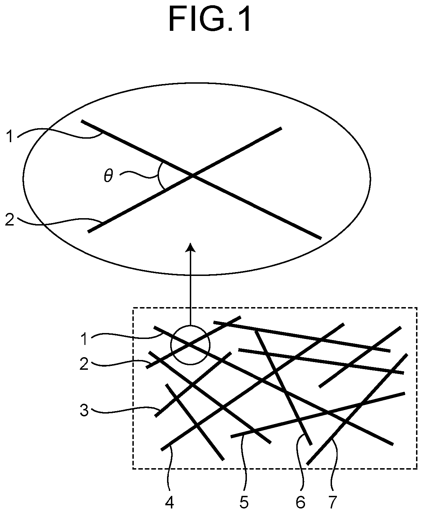

The two-dimensional orientation angle formed by one reinforcing monofilament and another reinforcing monofilament that intersects the one monofilament will be explained with referring to the drawings. FIG. 1 is one example of the sheet material and is a schematic diagram illustrating the dispersion state of the reinforcing fibers when only the reinforcing fibers are observed from a direction perpendicular to the cell wall. Focusing on a reinforcing monofilament 1, the reinforcing monofilament 1 intersects with reinforcing monofilaments 2 to 7. The intersection here refers to the state in which the focused reinforcing monofilament is observed to intersect with another monofilament in the observed two-dimensional plane. Here, in the actual sheet material, the reinforcing fiber 1 and the reinforcing fibers 2 to 7 do not necessarily contact with each other. The two-dimensional orientation angle is defined as an angle θ of 0° or more and 90° or less of two angles formed by the two intersecting reinforcing monofilaments.

There is no particular restriction specifically in the method of measuring the two-dimensional orientation angle of the sheet material or of the core material. For example, the method of observing the orientation of the reinforcing fibers from the surface of the sample that is cut out from the sheet material or from the core material may be used. In this case, polishing the sample surface to expose the fibers is desirable because it makes easier to observe the reinforcing fibers. Another example is the method in which the orientation of the reinforcing fibers is observed by using a transmitted light on the sample that is cut out from the sheet material or from the core material. In this case, slicing of the sample thinly is preferable because it makes easier to observe the reinforcing fibers. Another example is the method in which the sample that is cut out from the sheet material or from the core material is observed by an X-ray CT transmission method, which is followed by photographing the orientation image of the reinforcing fibers. In the case of the reinforcing fiber having a high X-ray transmission property, it is preferable to mix the reinforcing fiber with a tracing fiber or to apply a tracing agent to the reinforcing fiber so as to make easier for observation of the reinforcing fiber.

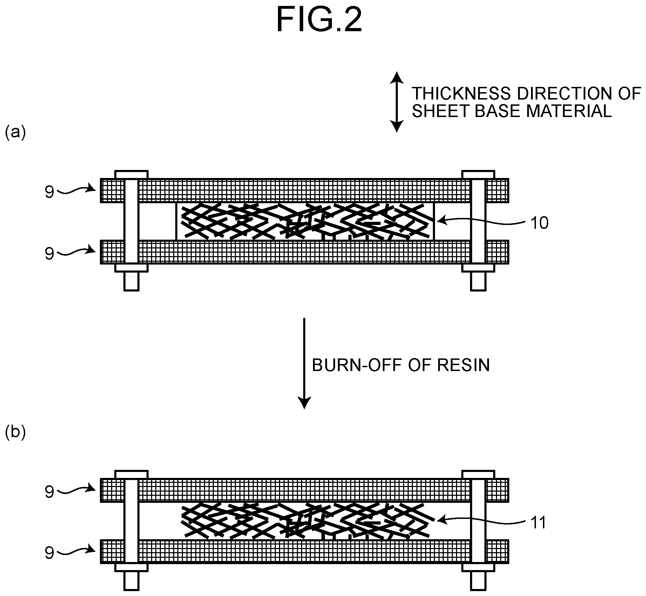

In the case that the measurement with the methods described above is difficult, for example, the method in which the orientation of the reinforcing fibers after removing the resin in such a way not to destroy the structure of the reinforcing fibers may be used. For example, as illustrated in FIG. 2(a), a cell wall or a sheet material 10 as the sample is sandwiched between two stainless steel meshes 9, and fixed with screws or the like to prevent the sample from moving, and then the resin component is burned off, and then, a resulting reinforcing fiber base material 11 (FIG. 2(b)) is observed and measured by means of an optical microscope or an electron microscope.

The two-dimensional orientation angle of the present invention is measured by the following procedure I through II.

I. Measure the two-dimensional orientation angles between one randomly selected reinforcing monofilament (e.g., the reinforcing monofilament 1 in FIG. 1) and all the intersecting reinforcing monofilaments (e.g., the reinforcing monofilaments 2 to 7 in FIG. 1), and calculate the average value of these angles. When there are too many reinforcing monofilaments that intersect the selected reinforcing monofilament, the average value of 20 randomly selected intersecting reinforcing monofilaments may be used as the substitute.

II. Focusing on a different reinforcing monofilament, repeat the measurement of I above for a total of five times, and calculate the average value as the two-dimensional orientation angle.

The two-dimensional orientation angle representing the fiber morphology and fiber orientation of the reinforcing fibers (Cf) in the reinforcing fiber base material is in the range of 10 to 80°, preferably in the range of 20 to 70°, and more preferably in the range of 30 to 60°, in which the closer to the ideal angle of 45° the better. When the two-dimensional orientation angle is less than 10° or more than 80°, this means that there are many reinforcing fibers remaining in the bundle form, which deteriorates not only the mechanical properties but also the texture thereof, such as a loss of a two-dimensional isotropy, non-negligible reinforcing fibers present in the thickness direction, and an uneven and varied density in the sheet material, all of which deteriorate a handling property at the time when producing the core material.

In order that the core material exhibits high compression strength and shear strength, the average fiber orientation angle of the reinforcing fibers (Cf) in the in-plane direction of the cell wall surface is preferably 0° or more and 45° or less, more preferably 5° or more and 40° or less, relative to 0° as the cell column axis direction. The average fiber orientation angle in this range not only enhances mechanical properties but also lowers the linear expansion coefficient in the thickness direction of the core material, which results in suppressing occurrence of the cracking due to thermal shrinkage differences during molding or when exposed to high and low temperature environments repeatedly. This makes it especially suitable for use in a thick-walled skin-core structural body and a large structural body, having the core material thickness of more than 50 mm.

Specifically, there is no particular restriction in the measurement method of the average fiber orientation angle of the reinforcing fiber (Cf) in the in-plane direction of the cell wall. For example, the method may be used in which the orientation of the reinforcing fiber (Cf) is observed from the surface of the sample that is cut out from the sheet material or from the core material, similarly to the case of the two-dimensional orientation angle described before, except that a cell column axis direction of 0° is used as the standard. In this case, polishing the sample surface to expose the fibers is preferable, because it makes easier to observe the reinforcing fibers (Cf). Another example is the method in which the orientation of the reinforcing fiber (Cf) is observed by using a transmitted light on the sample that is cut out from the sheet material or from the core material.

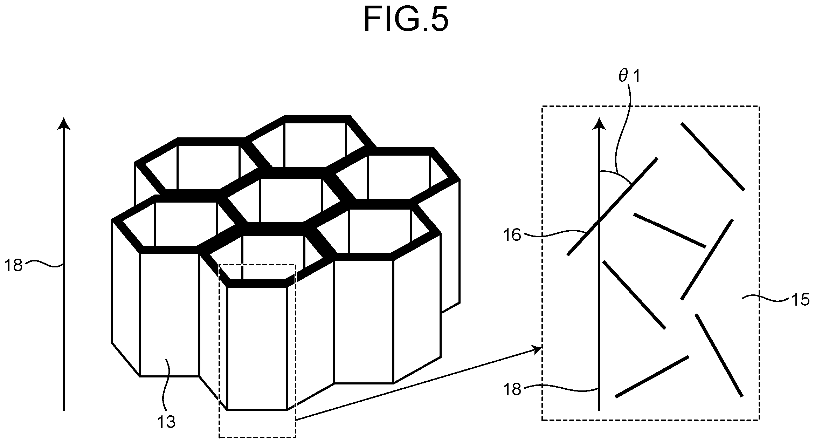

The average fiber orientation angle of the reinforcing fibers (Cf) in the in-plane direction of the cell wall will be explained with referring to the drawing. FIG. 5 is a schematic diagram of the cell wall that is cut out from the core material according to the present invention, indicating the dispersion state of the reinforcing fibers when observed from a direction perpendicular to the cell wall. Focusing on a reinforcing monofilament 16, the fiber orientation angle is defined as an angle $\theta 1$ in the range of 0° or more and 90° or less of the two angles formed by a reinforcing monofilament 16 and a cell column axis direction 18.

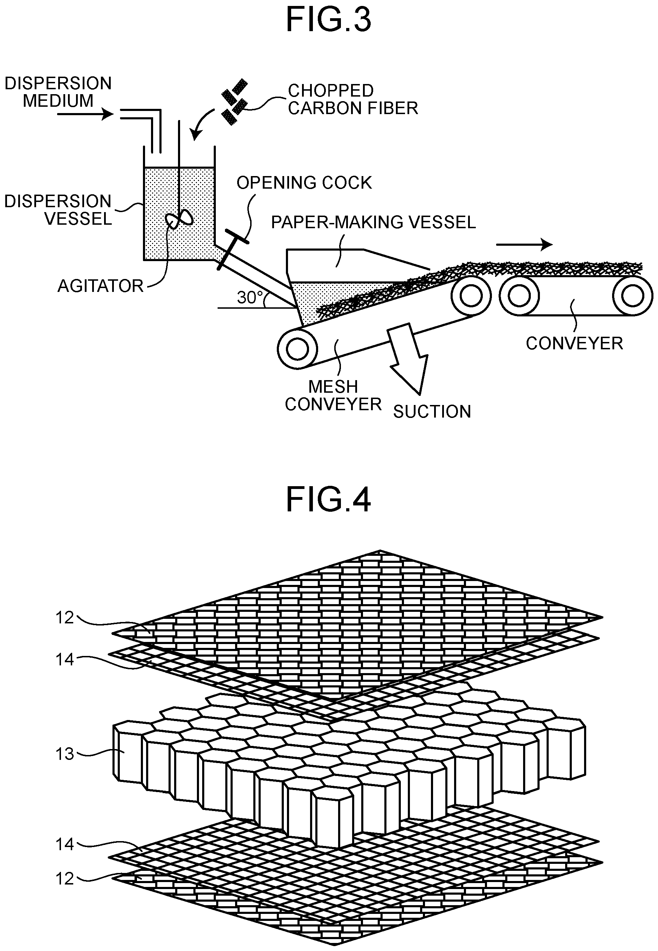

Bringing the two-dimensional orientation angle and the average fiber orientation angle $\theta 1$ in the in-plane direction of the cell wall surface close to the ideal angle may be achieved by dispersing and planarly disposing the reinforcing fibers at the time when producing the reinforcing fiber base material. In the dry method, illustrative examples of the method with which the reinforcing fibers are dispersed furthermore include: the method in which an opening bar of the fibers is installed, the method in which the opening bar of the fibers is vibrated, the method in which the card opening is made finer, and the method in which the rotation speed of the card is adjusted. In the wet method, illustrative examples of the method include: the method in which an agitation condition of the reinforcing fibers at the time when dispersing them is adjusted, the method in which the fiber concentration is diluted, the method in which the viscosity of the solution is adjusted, and the method in which an eddy current at the time when the dispersion solution is transferred is suppressed. In order to dispose the reinforcing fibers planarly, illustrative examples of the dry method include the method in which, at the time when collecting the reinforcing fibers, a static electricity or a rectified air is used, and the method in which the pulling speed of the conveyor is adjusted. Illustrative examples of the wet method include the method in which re-agglomeration of the reinforcing fibers that have been dispersed is prevented by an ultrasonic wave or the like, the method in which the filtration speed is adjusted, the method in which the mesh diameter of the conveyor is adjusted, and the method in which the pulling speed of the conveyor is adjusted. The method is not particularly limited to these methods; the object may be achieved by controlling other production conditions with checking the state of the reinforcing fiber base material. In particular, in the case of producing by the wet method, for example, the method using the papermaking equipment as illustrated in FIG. 3 may be used. By increasing the concentration of the charging fibers, the basis weight of the resulting reinforcing fiber base material may be increased. In addition, the basis weight may also be adjusted by adjusting the flow rate (flow amount) of the dispersion solution and the speed of the mesh conveyor. For example, the basis weight of the resulting reinforcing fiber base material may be increased by increasing the flow rate of the dispersion solution while keeping the speed of the mesh conveyor constant. Conversely, the basis weight of the resulting reinforcing fiber base material may be decreased by decreasing the flow rate of the dispersion solution while keeping the speed of the mesh conveyor constant. Furthermore, the orientation of the fibers may be controlled by adjusting the speed of the mesh conveyor relative to the flow rate of the dispersion solution. For example, by increasing the speed of the mesh conveyor relative to the flow rate of the dispersion solution, the fibers in the resulting reinforcing fiber base material are more oriented in the pulling direction of the mesh conveyor, making it possible to dispose the reinforcing fibers (Cf) with a reinforcing fiber orientation angle of 45° or less.

From the viewpoint of compatibly satisfying both the mechanical properties and moldability of the core material, the mass ratio of the reinforcing fiber base material in the sheet material to be used for the core material according to the present invention is preferably in the range of 10 to 60% by mass, more preferably in the range of 12 to 50% by mass, and still more preferably in the range of 15 to 40% by mass, relative to 100% by mass of the sheet material. In the sheet material according to the present invention, it is required to impregnate the void of the reinforcing fiber base material with the resin; the impregnation rate thereof is preferably in the range of 30 to 100% by volume, more preferably in the range of 40 to 100% by volume, and still more preferably in the range of 50 to 100% by volume. When the impregnation rate is within the desirable range, this may be used without impairing the advantageous effects of the present invention, such as in the handling property of the sheet material and the moldability of the core material. In order that the core material exhibits excellent mechanical properties, the rate of the unimpregnated portion in the sheet material (void ratio) is preferably 5% or less, and more preferably 2% or less. From the viewpoint of enhancement of the light weight property of the core material of the present invention, the volume rate of the reinforcing fiber in the sheet material when the impregnation rate is converted to 100% by volume is preferably 50% by volume or less, more preferably 40% by volume or less, and still more preferably in the range of 10 to 30% by volume.

There is no particular restriction in the measurement method of the impregnation rate; for example, the impregnation rate may be conveniently measured by the methods described below. Thus, illustrative examples thereof include: first of all, the method in which the total area of the voids is measured from the microscopic picture after observation of the cross section of the sheet material, the method in which a thickness h0 of the sheet material at 23°C and a thickness hc0 of the sheet material at 23°C after press molding to determine the ratio (hc0/h0), and the method in which the ratio of the theoretical density obtained from the ratio of each used material to the bulk density of the sheet material is determined. Hereinafter, the method is specifically described in which the cross section in the thickness direction of the sheet material is observed, and then, the area of the void portion in the cross section and the area of the entire cross section are measured so as to calculate the impregnation rate. Namely, after the sheet material is embedded with a thermosetting resin such as an epoxy resin, the surface of the cross sectional edge portion of the sheet material is polished, and then, the area of about 500 to 1000 um in width is observed with an optical microscope or an electron microscope. Then in the contrast ratio, the area of the portion impregnated with the resin and the area of the portion not impregnated with the resin are measured to calculate the resin impregnation rate by the following formula. Here, the total area of the reinforcing fiber base material is the area that is obtained by subtracting the area of the portion impregnated with the resin and the area of the portion not impregnated with the resin from the cross-sectional area of the observed portion of the sheet material.

- Resin impregnation rate (%) = 100 × (total area impregnated with resin) / (total area impregnated with resin + area not impregnated with resin)

The bulk density of the sheet material may be determined from the volume of the sheet material at 23°C and the mass of the sheet material. The bulk density of the sheet material is preferably in the range of 0.8 to 1.6 g/cm$^3$, more preferably in the range of 0.9 to 1.4 g/cm$^3$, and still more preferably in the range of 1.0 to 1.3 g/cm$^3$. When the bulk density is in the desirable range, the molded product using the core material according to the present invention may be ensured to have a sufficient light weight property. The basis weight of the sheet material is preferably in the range of 10 to 500 g/m$^2$, more preferably in the range of 30 to 400 g/m$^2$, and still more preferably in the range of 100 to 300 g/m$^2$.

To ensure the handling property at the molding process of the core material, the higher the value of a tensile strength σ of the sheet material, the faster and more economical the molding process will be, and the tensile strength is preferably at least 10 MPa or more at room temperature (23°C). When the tensile strength is less than 10 MPa, there may be a problem occasionally such as tearing of the sheet material during molding operation of the core material. The tensile strength σ of the sheet material is more preferably 1000 MPa or less at room temperature (23°C). When the tensile strength σ of the sheet material is too high and thus too firm, the handling property during molding of the core material may be deteriorated. To measure the tensile strength σ of the sheet material, for example, a test piece is cut out from the sheet material, and the tensile properties are measured in accordance with the ISO 527-3 method (1995), in which the test piece is prepared for four directions: +45°, -45°, and 90° relative to 0° of an arbitrarily chosen direction. The number of the measurement in each direction is n=5, and the average value thereof may be used as the tensile strength.

From the viewpoint of the handling property at the molding process of the core material, the thickness h0 (mm) of the sheet material at 23°C is preferably in the range of 0.02 to 1 mm. When the thickness h0 is less than 0.02 mm, the sheet material may tear at the process of transferring the sheet material or of molding the core material. When the thickness h0 is more than 1 mm, the fiber orientation to the thickness direction increases, causing the sheet material to expand in thickness during the molding process of the core material, which may result in deformation, so that the quality of the molded product may be impaired. Therefore, in the sheet material used in the present invention, the thickness h0 at 23°C is preferably in the range of 0.05 to 0.8 mm, more preferably in the range of 0.1 to 0.6 mm.

The cover factor of the reinforcing fibers in the sheet material to be used for the core material according to the present invention is preferably 95% or more, and more preferably 99% or more. The cover factor here refers to the value defined by the following formula, in which an area S1 is set on the sheet material, and S2 is defined as the area of a void portion formed by the reinforcing fibers or as the area of a portion filled only with the resin without the reinforcing fibers present in the area S1.

$$\text{Cover factor (\%)} = [(S1 - S2)/S1] \times 100$$

In order that the core material exhibits a high compression property or a high buckling resistance at the time when molded with the skin or used as the structural member, the cell wall needs to have a high elastic modulus. Accordingly, the elastic modulus of the core material is preferably 1 GPa or more at room temperature (20°C±15°C), and more preferably 1 GPa or more at 120 to 200°C, which is the general molding temperature of the skin-core structural body. Note that, the elastic modulus here is the storage modulus of the skin-core structural body measured by the dynamic mechanical analysis (DMA) using DMA Q800 (manufactured by TA Instruments Inc.) at room temperature or at the molding temperature (120 to 200°C) with the temperature raising rate of 5°C/minute, in which the cell wall is taken from the core material, and the thickness direction of the core material (cell column axis direction) is set as the longitudinal direction of the specimen, and the DMA measurement is conducted under a single cantilever mode at a frequency of 1 Hz.

The matrix resin in the sheet material to be used in the core material according to the present invention may be any of a thermoplastic resin and a thermosetting resin. Illustrative examples of the thermoplastic resin include: polyester resins such as polyethylene terephthalate and polybutylene terephthalate; polyolefins such as polyethylene, polypropylene, polybutylene, modified polypropylene, and polyoxymethylene; polyamides such as polyamide 6 and polyamide 66; polycarbonate; polymethyl methacrylate; polyvinyl chloride; polyarylene sulfides such as polyphenylene sulfide; polyphenylene ether; modified polyphenylene ether; polyimide; polyamide imide; polyether imide; polysulfone; modified polysulfone; polyether sulfone; polyketone; polyarylene ether ketones such as polyether ketone, polyether ether ketone, and polyether ketone ketone; polyarylate, polyether nitrile, and phenoxy resin. These thermoplastic resins may also be copolymers, modified resins, and/or blends of two or more of these resins. Among these, from the viewpoints of the heat resistance and the mechanical properties, at least one thermoplastic resin selected from the group consisting of polyarylene sulfide, polyetherimide, polyethersulfone, polysulfone, and polyarylene ether ketone is more preferable.

Illustrative examples of the thermosetting resin include an unsaturated polyester resin, a vinyl ester resin, an epoxy resin, a phenol resin, a urea resin, a melamine resin, a thermosetting polyimide resin, a BT resin, a cyanate ester resin, a bismaleimide resin, a benzoxazine resin, as well as a copolymer of these resins, a modification thereof, and/or a blend of two or more of these resins. Among these, from the viewpoints of the heat resistance and of the mechanical properties, at least one thermosetting resin selected from the group consisting of an epoxy resin, a phenol resin, a benzoxazine resin, a BT resin, a cyanate ester resin, a bismaleimide resin, and a polyimide resin is more preferable.

The resin component to be used in the present invention may be a blend of the above thermoplastic resin matrix with a thermosetting resin, or a blend of the above thermosetting resin matrix with a thermoplastic resin. In particular, in the case where the thermosetting resin is used, from the viewpoint of enhancing the impact strength, thermoplastic resin particles are preferably used as the interlayer particles. In addition, depending on the application, the resin component may be further added with: fillers such as mica, talc, kaolin, hydrotalcite, sericite, bentonite, xonotlite, sepiolite, smectite, montmorillonite, warastenite, silica, calcium carbonate, glass beads, glass flakes, glass microballoons, clay, molybdenum disulfide, titanium oxide, zinc oxide, antimony oxide, calcium polyphosphate, graphite, barium sulfate, magnesium sulfate, zinc borate, calcium borate, aluminum borate whiskers, potassium titanate whiskers, and a polymeric compound; conductivity affording materials such as a metallic type, a metal oxide, and carbon black and graphite powders; halogen-based flame retardants such as a brominated resin; antimony-based flame retardants such as antimony trioxide and antimony pentoxide; phosphorus-based flame retardants such as ammonium polyphosphate, an aromatic phosphate, and red phosphorus; organic acid metal salt type flame retardants such as an organic boric acid metal salt, a carboxylic acid metal salt, and an aromatic sulfonimide metal salt; inorganic flame retardants such as zinc borate, zinc, zinc oxide, and a zirconium compounds; nitrogen-based flame retardants such as cyanuric acid, isocyanuric acid, melamine, melamine cyanurates, melamine phosphate, and nitrogenated guanidine; fluorine-based flame retardants such as PTFE; silicone-based flame retardants such as polyorganosiloxane; metal hydroxide-based flame retardants such as aluminum hydroxide and magnesium hydroxide; and other flame retardants; flame retardant adjuvants such as cadmium oxide, zinc oxide, cuprous oxide, cupric oxide, ferrous oxide, ferric oxide, cobalt oxide, manganese oxide, molybdenum oxide, tin oxide, and titanium oxide; a pigment, a dye, a lubricant, a mold release agent, a compatibilizing agent, and a dispersant; crystal nucleating agents such as mica, talc, and kaolin; plasticizers such as a phosphate; a heat stabilizer, an antioxidants, a coloring inhibitor, a UV absorber, a fluidity modifier, a foaming agent, an antibacterial agent, an antivibration agent, an odor repellent, a sliding property modifier, and antistatic agents such as polyether ester amide. In particular, when the application is to electrical and electronic equipment, an automobile, an aircraft, and the like, flame retardancy may be required; in this case, a phosphorus-based flame retardant, a nitrogen-based flame retardant, or an inorganic flame retardant is preferably added.

<Skin-Core Structural Body>

There is no particular restriction in the core material according to the present invention. This is typically used as the skin-core structural body having the skin material bonded to at least one side, preferably both sides, of the end surface where the columnar cell opens (core open surface). There is no particular restriction in the method of bonding the skin material to the core material; examples thereof include the bonding by means of an adhesive or of a thermal welding. For example, the adhesive sheet and the skin material are placed on both sides of the core material so that the skin material may be bonded to the core material with heating to cure. There is no particular restriction in the bonding process; thus, the product may be formed by a vacuum bag molding, an autoclave molding, a press molding, or the like.

It is preferable that the fiber-reinforced composite material to be used as the skin material is formed from a prepreg having the reinforcing fibers (Sf) impregnated with the resin (Sr). There is no restriction in the form and arrangement of the reinforcing fiber; thus, they may be used in one direction, in a random direction, in a sheet form, in a mat form, in a woven form, in a braided form, or the like. Among these, two-dimensional woven fabrics may be used preferably. Although there is no particular restriction in the weave structure, preferably used are woven fabrics such as a plain weave, a twill weave, an intertwined weave, and a satin weave. A plain weave structure is especially preferable because it is easy to create a thin molding body. The woven yarns of the fabric are composed of fiber bundles, in which the number of filaments in a single fiber bundle is preferably in the range of 2500 to 50000. When the number of filaments is less than 2500, the fiber arrangement tends to meander, resulting in the deterioration of the strength thereof. When the number of filaments is more than 50000, it is difficult for the resin to be impregnated into the fibers during formation or molding of the prepreg. The number of filaments is more preferably in the range of 2800 to 25000. From the viewpoint of enhancing the surface smoothness of the honeycomb skin panel, the filaments of 5000 or more are especially preferable.

The basis weight of the reinforcing fiber in the prepreg is preferably in the range of 150 to 550 g/m$^2$. This allows the skin material to have a further enhanced mechanical strength. When the basis weight of the reinforcing fiber is less than 150 g/m$^2$, the mechanical strength thereof may be insufficient, and when more than 550 g/m$^2$, the formability thereof during molding may be impaired. The basis weight of the reinforcing fiber is more preferably in the range of 170 to 500 g/m$^2$. When the mass fraction of the reinforcing fiber in the prepreg is less than 40% by mass, the rigidity of the resulting skin material may be insufficient, and when more than 85% by mass, a void may be readily formed in the resulting skin material.

Specifically, illustrative examples of the reinforcing fiber in the prepreg include a carbon fiber, a graphite fiber, an aramid fiber, a silicon carbide fiber, an alumina fiber, a boron fiber, a tungsten carbide fiber, and a glass fiber. Several of these reinforcing fibers may be used in combination. Among these, a carbon fiber and a graphite fiber, which have good specific strength and specific elastic modulus and are recognized to significantly contribute to the weight reduction, are superior in the present invention. As for the carbon fiber and the graphite fiber, every kind of the carbon fiber and the graphite fiber may be used in accordance with the use thereof. From the viewpoints of the inherent tensile strength of the fiber and the high impact resistance when used as the skin-core structural body, the fiber having a strand strength of 3000 MPa or more and 7500 MPa or less in a strand tensile test, and an elastic modulus of 200 GPa or more and 600 GPa or less is preferably used. The strand tensile test is performed by impregnating bundles of the carbon fibers with a matrix resin having the following composition, which is followed by curing it at 130°C for 35 minutes and then performing measurement in accordance with JIS R7601 (2006).

The number of the filament in the carbon fiber is preferably in the range of 1000 to 100000, more preferably in the range of 3000 to 50000. When the number of filaments in the carbon fiber is less than 1000, the operation at the prepreg-forming process becomes more cumbersome, and when the number is more than 100000, it becomes difficult to impregnate the resin between the filaments, which may result in failure of the impregnation.

In the skin-core structural body according to the present invention, an average peel torque M (climbing drum peel strength) of the skin material and the core material, measured in accordance with ASTM D1781 (2004), is preferably 30 N·m/m or more, more preferably 35 N·m/m or more. Having the climbing drum peel strength of 30 N·m/m or more makes the skin-core structural body suitable as the structural member for a flying vehicle such as an aircraft because it is possible to withstand a heavy load and exhibit a weight reduction effect. There is no upper limit in the climbing drum peel strength because the higher the peel strength, the stronger the bonding between the skin material and the core material.

In the reinforcing fiber (Sf) in the skin material formed of the fiber-reinforced composite material, a tensile modulus E is preferably 200 GPa or more, and a fracture strain strength W is preferably 40 MPa or more. The use of the reinforcing fiber having the high tensile modulus leads to a high strength in the climbing drum peel test, which is one of the bonding evaluation methods between the skin material and the core material. The fracture strain strength is calculated based on the following formula: W = $\sigma^2$/2E, using the tensile strength ($\sigma$: MPa) and the elastic modulus (E: MPa) measured in accordance with JIS-R7601 (2006). Specifically, illustrative examples of the commercially available product of the carbon fiber having high strength and high elongation as mentioned above include "TORAYCA (registered trademark)" T800G-24K, "TORAYCA (registered trademark)" T800S-24K, "TORAYCA (registered trademark)" T700G-24K, "TORAYCA (registered trademark)" T700S-24K, "TORAYCA (registered trademark)" T300-3K, and "TORAYCA (registered trademark)" T1100G-24K (all manufactured by Toray Industries, Inc.).

It is preferable that the prepreg to be used for the skin material has a cover factor of 95% or more. When the cover factor is insufficient, this may cause a pit on the surface of the molded skin material and a porosity inside thereof, which may lower the climbing drum peel strength. Here, the cover factor is the ratio of the area of the reinforcing fibers occupying the total prepreg area, as in the case of the aforementioned sheet material. In particular, in the case of the prepreg using the woven reinforcing fiber base material, because of the existence of weave (gaps formed between the weaving yarns), the cover factor generally tends to be lower than that of the prepreg using the reinforcing fiber base material in which the reinforcing fibers are aligned in one direction. The use of the woven prepreg having a cover factor of 95% or more as the skin panel results in the skin-core structural body having an excellent strength due to a low level of a defect in the skin material.

For the flammability of the skin-core structural body according to the present invention, the burning time may be measured by the method in accordance with FAR 25.853 Appendix F. The superiority of the burning time is judged in accordance with Advisory Circular (AC) 25.853-1a(1) i, "Flammability Requirements for Aircraft Seat Cushions", published by the Federal Aviation Administration. The burning time of the skin-core structural body after extinguishing the ignition source is 30 seconds or less, and preferably 15 seconds or less. When the burning time of the skin-core structural body is more than 30 seconds, it means a poor flammability, i.e., it burns up, which is undesirable from a safety standpoint. There is no restriction in the lower limit of the burning time of the skin-core structural body, because the shorter the burning time, the better the flammability. The above FAR 25.853 Appendix F of the U.S. Federal Aviation Regulations (FAR) is used to measure and evaluate the burning time by fixing the test specimen with its long sides vertical, which is followed by applying a flame to the center of the specimen bottom using a burner from just below of it for burning. In this evaluation method, the distance of the specimen from the burner is set to 19 mm, and the time during which the flame from the specimen continues after the specimen is burned for 60 seconds is determined as the burning time.

The resin (Sr) to be used in the prepreg of the skin material may be any of the thermoplastic resin and the thermosetting resin. Illustrative examples of the thermoplastic resin include: polyester resins such as polyethylene terephthalate and polybutylene terephthalate; polyolefins such as polyethylene, polypropylene, polybutylene, modified polypropylene, and polyoxymethylene; polyamides such as polyamide 6 and polyamide 66; polycarbonate; polymethyl methacrylate; polyvinyl chloride; polyarylene sulfides such as polyphenylene sulfide; polyphenylene ether; modified polyphenylene ether; polyimide; polyamide imide; polyether imide; polysulfone; modified polysulfone; polyether sulfone; polyketone; polyarylene ether ketones such as polyether ketone, polyether ether ketone, and polyether ketone ketone; polyarylate, polyether nitrile, and phenoxy resin. These thermoplastic resins may also be copolymers, modified resins, and/or blends of two or more of these resins. Among these, from the viewpoints of the heat resistance and of the mechanical properties, at least one thermoplastic resin selected from the group consisting of a polyarylene sulfide resin, a polyetherimide resin, a polyethersulfone resin, a polysulfone resin, and a polyarylene ether ketone resin is more preferable.

Illustrative examples of the thermosetting resin include an unsaturated polyester resin, a vinyl ester resin, an epoxy resin, a phenol resin, a urea resin, a melamine resin, a thermosetting polyimide resin, a BT resin, a cyanate ester resin, a bismaleimide resin, a benzoxazine resin, as well as a copolymer of these resins, a modification thereof, and/or a blend of two or more of these resins. Among these, from the viewpoints of the heat resistance and of the mechanical properties, at least one thermosetting resin selected from the group consisting of an epoxy resin, a phenol resin, a cyanate ester resin, a bismaleimide resin, and a polyimide resin is more preferable.

In addition, depending on the use thereof, other filler or additive may be included as appropriate, to the extent that the purpose of the present invention is not impaired. For example, the resin of the prepreg may be a blend of a thermoplastic resin mixed with a thermosetting resin, or a blend of the thermosetting resin mixed with a thermoplastic resin. In particular, when the application is to electrical and electronic equipment, an automobile, an aircraft, and the like, flame retardancy may be required; in this case, a phosphorus-based flame retardant, a nitrogen-based flame retardant, or an inorganic flame retardant is preferably added.

In the skin-core structural body according to the present invention, it is preferable that a heat resistance temperature $Ts$ of the resin that makes up the skin material and a heat resistance temperature $Tc$ of the resin of the sheet material that makes up the core material satisfy $Ts \leq Tc$. The heat resistance temperature here represents a melting point in the case of a crystalline resin and a glass transition temperature in the case of an amorphous resin or of a thermosetting resin. When satisfying $Ts \leq Tc$, it is easier to maintain the shape of the core material, so that it is easier to obtain a high-quality molded body or to mold it in a short time. In addition, this is preferable because it is easy to bond the skin material to the core material by the thermal welding, which leads to simplification of the molding process. It is preferable that $Tc$ is higher than $Ts$ by 10°C or more, more preferably by 20°C or more.

It is preferable that the skin-core structural body according to the present invention has an interface layer where the resin (Cr) of the core material and the resin (Sr) of the skin material are mingled to achieve a high bonding strength. The term mingling here refers to the state in which the resin (Cr) and the resin (Sr) are homogeneously dispersed with each other, and this includes not only the state obtained by mixing the resin (Cr) and the resin (Sr) that are mutually compatible, but also the dispersed state in which the resin (Cr) and the resin (Sr) are intermingled in spite of being mutually incompatible. There is no particular restriction in the measurement method of the mingled interfacial layer. It may be determined by analyzing the cross section of the skin-core structural body by known methods, that include, for example, chemical composition mapping methods such as a microscopic IR, a SEM-EDX, a TEM-EDX, and a TEM-EELS, or viscoelastic mapping methods such as a VE-AFM.

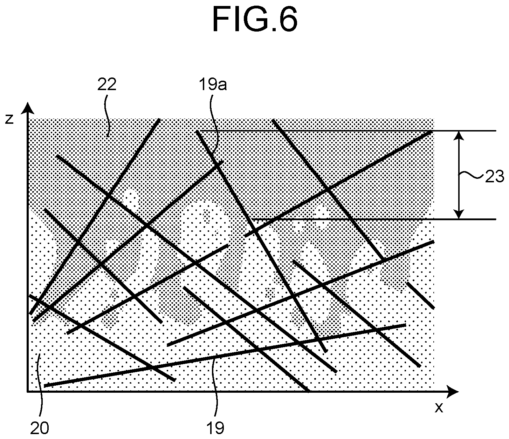

In the skin-core structural body according to the present invention, it is preferable that a part of the discontinuous fibers (Cf) contained in the cell wall of the core material penetrates into the skin material. The state in which the fibers (Cf) penetrate into the skin material is illustrated in FIG. 6. Namely, there are a fiber (Cf) 19 that is in contact with both a resin (Sr) 22 of the skin material and a resin (Cr) 20 of the core material, straddling the interface layer formed by the resin (Sr) 22 and the resin (Cr) 20. The maximum penetration distance of the fiber (Cf) 19 into the skin material is preferably 5 um or more, and more preferably 10 um or more. Focusing on one certain fiber (Cf) 19 that has penetrated into the skin material, the penetration distance of the fiber (Cf) 19 into the skin material is defined as the shortest distance from the virtual plane (horizontal plane parallel to the skin material) that exists at the depth of the end of the fiber (Cf) 19 that has penetrated into the side of the resin (Sr) 22 of the skin material to the border between the resin (Sr) 22 of the skin material and the resin (Cr) 20 of the core material, namely, the distance indicated by numerical symbol 23 in the case of a fiber (Cf) 19a illustrated in FIG. 6. Then, the largest value of the measured penetration distance is defined as the maximum penetration distance. Specifically, the maximum penetration distance into the skin material by the fiber (Cf) may be measured by the method described as follows. The bonded portion of the skin material to the core material of the structural body is cut out and its cross section in the thickness direction is photographed at 10 arbitrarily selected locations (10 images) using a laser microscope with a 1000-times magnification, and from the obtained images, the penetration distance of each monofilament of the fiber (Cf) that penetrates into the skin material is measured; then, the largest value among them is considered as the maximum penetration distance.

In the case that the resin (Sr) of the skin material is a thermosetting resin, it is preferable to place the uncured prepreg in the end surface of the core material and bond them by pressing with heating, i.e., by so-called co-curing. Compared to what is called co-bonding, in which the skin material is pre-cured and then bonded to the core material using an adhesive, the co-curing requires fewer molding cycles, enabling a shorter molding time, which is advantageous in terms of the molding cost. In addition, the co-curing of the skin material allows the fibers (Cf) to penetrate into the skin material, so that they may form a strong bond.

When the resin (Sr) of the skin material is a thermoplastic resin, it is preferable to bond it to the core material by pressing with heating at a temperature equal to or higher than the melting point of the resin (Sr). The co-curing of the skin material allows the fiber (Cf) to readily penetrate into the resin (Sr) of the skin material, so that the skin material and the core material may form a strong bond.

[Examples]

The materials used in Examples and Comparative Examples are as follows.

[Reinforcing Fiber 1]

Spinning, firing, and surface oxidation treatment of the polyacrylonitrile-based copolymer were performed to obtain continuous carbon fibers with a total monofilament number of 12,000. The properties of this continuous carbon fiber were as follows.

Monofilament diameter: 7 um
Specific gravity: 1.8
Tensile strength: 4600 MPa
Tensile modulus: 220 GPa

[PEKK Resin]

A resin film with a basis weight of 60 $g/m^2$ was prepared from a polyether ketone ketone resin ("KEPSTAN" (registered trademark) 7002, manufactured by Alkema S.A.).

[PPS Resin]

A resin film with a basis weight of 60 $g/m^2$ was prepared from a polyphenylene sulfide resin ("Torelina" (registered trademark) M2888, manufactured by Toray Industries, Inc.).

[PEI Resin]

A resin film with a basis weight of 60 $g/m^2$ was prepared from a polyether imide resin ("ULTEM" (registered trademark) 1000, manufactured by SABIC Corp.).

[Reinforcing Fiber Base Material 1]

The carbon fiber 1 was cut to 6 mm using a cartridge cutter to obtain the chopped carbon fibers. A dispersion solution with a concentration of 0.1% by mass composed of a surfactant (polyoxyethylene lauryl ether (trade name), manufactured by Nacalai Tesque, Inc.) and water was prepared, and the reinforcing fiber base material was produced using this dispersion solution and the chopped carbon fibers by using production equipment for the reinforcing fiber base material as illustrated in FIG. 3. The production equipment illustrated in FIG. 3 is equipped with, as the dispersion tank, a cylindrical vessel with a diameter of 1000 mm having an opening cock at the bottom of the vessel, and a linear transporting portion (inclination angle of 30°) that connects the dispersion vessel to the paper-making vessel. In the dispersion vessel, an agitator is arranged on the top opening thereof, through which the chopped carbon fibers and the dispersion solution (dispersion medium) may be charged. The paper-making vessel is equipped with at its bottom a mesh conveyor having a paper-making surface with a width of 500 mm, and this mesh conveyer is connected to a conveyor that is capable of transporting the carbon fiber base material (paper base material). The paper making was performed with a carbon fiber concentration of 0.05% by mass in the dispersion solution. The resulting carbon fiber base material was then dried in a drying oven at 200°C for 30 minutes to obtain the reinforcing fiber base material 1. The resulting basis weight was 40 g/m$^2$.

[Reinforcing Fiber Base Material 2]

The reinforcing fiber base material 2 was prepared in the same way as the reinforcing fiber base material 1, except that the speed of the mesh conveyor during papermaking was adjusted to four times faster than the flow rate of the dispersion solution.

[Sheet Material 1]

The reinforcing fiber base material 1 as the reinforcing fiber base material and the PEKK resin as the resin film were placed in the order of [resin film/reinforcing fiber base material/resin film] to obtain a stacked thing. Next, the sheet material 1 was obtained by the following processes (I) through (IV).

(I) The stacked thing was placed in the cavity of the press molding equipment that had been pre-heated to 250°C, and then the mold was closed and kept this state for 120 seconds.
(II) Next, a pressure of 5 MPa was applied and the temperature was raised to 350°C, which was then followed by keeping this state for 10 minutes.
(III) The cavity temperature was lowered to 50°C with keeping this pressure.
(IV) The mold was opened and the resulting sheet material was taken out.

[Sheet Material 2]

The reinforcing fiber base material 1 as the reinforcing fiber base material and the PPS resin as the resin film were placed in the order of [resin film/reinforcing fiber base material/resin film] to obtain a stacked thing. Next, the sheet material 2 was obtained by the following processes (I) through (V).

(I) The stacked thing was placed in the cavity of the press molding equipment that had been pre-heated to 200°C, and then the mold was closed and kept this state for 120 seconds.
(II) Next, a pressure of 5 MPa was applied and the temperature was raised to 300°C, which was then followed by keeping this state for 10 minutes.
(III) The cavity temperature was lowered to 50°C with keeping this pressure.
(IV) The mold was opened and the resulting sheet material was taken out.

[Sheet Material 3]

The reinforcing fiber base material 2 as the reinforcing fiber base material and the PEKK resin as the resin film were placed in the order of [resin film/reinforcing fiber base material/resin film] to obtain a stacked thing. Next, the sheet material 1 was obtained by the following processes (I) through (IV).

(I) The stacked thing was placed in the cavity of the press molding equipment that had been pre-heated to 250°C, and then the mold was closed and kept this state for 120 seconds.
(II) Next, a pressure of 5 MPa was applied and the temperature was raised to 350°C, which was then followed by keeping this state for 10 minutes.
(III) The cavity temperature was lowered to 50°C with keeping this pressure.
(IV) The mold was opened and the resulting sheet material was taken out.

[Sheet Material 4]

The reinforcing fiber 1 was cut into 25 mm length, the cut carbon fiber bundles were scattered so that the carbon fiber bundles were distributed in random directions to make the reinforcing fiber base material of 40 g/m$^2$, and the PEKK resin as the resin film was placed in the order of [resin film/reinforcing fiber base material/resin film] to obtain a stacked thing. Next, the sheet material 4 was obtained by the following processes (I) through (IV).

(I) The stacked thing was placed in the cavity of the press molding equipment that had been pre-heated to 250°C, and then the mold was closed and kept this state for 120 seconds.
(II) Next, a pressure of 5 MPa was applied and the temperature was raised to 350°C, which was then followed by keeping this state for 10 minutes.
(III) The cavity temperature was lowered to 50°C with keeping this pressure.
(IV) The mold was opened and the resulting sheet material was taken out.

[Sheet Material 5]

The reinforcing fiber base material 1 as the reinforcing fiber base material and the PEI resin as the resin film were placed in the order of [resin film/reinforcing fiber base material/resin film] to obtain a stacked thing. Next, the sheet material 5 was obtained by the following processes (I) through (V).

(I) The stacked thing was placed in the cavity of the press molding equipment that had been pre-heated to 250°C, and then the mold was closed and kept this state for 120 seconds.
(II) Next, a pressure of 5 MPa was applied and the temperature was raised to 350°C, which was then followed by keeping this state for 10 minutes.
(III) The cavity temperature was lowered to 50°C with keeping this pressure.
(IV) The mold was opened and the resulting sheet material was taken out.

[Honeycomb Core 1]

The honeycomb core was fabricated by the corrugating method using the sheet material 1 as the base material. First, the base material was processed by folding to a corrugated plate while heating, then resulting multiple corrugated plates were stacked in a block form with each valley and top in a positional relationship in which they were displaced by half the pitch of the wave while interleaving an adhesive, which was then followed by pressing with heating to bond them to obtain the honeycomb core 1 (thickness of 12.7 mm and the mass per unit volume of 45 kg/m$^3$).

[Honeycomb Core 2]

The honeycomb core 2 (thickness of 12.7 mm and the mass per unit volume of 50 kg/m$^3$) was fabricated by the same process as the honeycomb core 1 above, except that the sheet material 2 was used as the base material.

[Honeycomb Core 3]

The honeycomb core 3 (thickness of 12.7 mm and the mass per unit volume of 45 kg/m$^3$) was fabricated by the same process as the honeycomb core 1 above, except that the sheet material 3 was used as the base material.

[Honeycomb Core 4]

The honeycomb core was fabricated using the same process as the honeycomb core 1 above, except that the sheet material 4 was used as the base material. However, when the base material was processed by folding to a corrugated plate, a hole was formed in the sheet material, and the area occupied only by the resin was formed due to uneven deformation, so that it was not possible to fabricate the honeycomb core even by adjusting the processing conditions.

[Honeycomb Core 5]

The aramid honeycomb (model number: SAH1/8-3.0, a thickness of 12.7 mm, and a mass per unit volume of 48 kg/m$^3$, manufactured by Showa Aircraft Industry Co., Ltd.) was used as the honeycomb core 5.

[Honeycomb Core 6]

The honeycomb core 6 (a thickness of 12.7 mm, and a mass per unit volume of 50 kg/m$^3$) was fabricated by the same process as the honeycomb core 1 above, except that the sheet material 5 was used as the base material.

[Skin material]

Epoxy resins (40 parts by mass of "Araldite (registered trademark)" MY721 manufactured by Huntsman Advanced Materials, Inc., 35 parts by mass of "Epikote (registered trademark)" 828, 25 parts by mass of "Epikote (registered trademark)" 1001, and 25 parts by mass of "Epikote (registered trademark)" 154; all of these Epikotes were manufactured by Japan Epoxy Resins Co., Ltd.) were heated and mixed with a polyether sulfone resin ("SUMIKAEXCEL (registered trademark)" PES 5003P: 5 parts by mass, manufactured by Sumitomo Chemical Company) using a kneader to uniformly dissolve the polyether sulfone resin, and then, polyamide particles ("AMILAN (registered trademark)" SP-500: 13 parts by mass, manufactured by Toray Industries, Inc.) and a curing agent ("Seikacure (registered trademark)" S: 36 parts by mass, manufactured by Seika Corp.) were kneaded by the kneader to obtain an uncured epoxy resin composition, from which an epoxy resin film was prepared by using a knife coater. Next, the resulting films were stacked on both sides of the reinforcing fiber fabric to impregnate the resin composition while being heated and pressed using a heat roll to produce the prepreg 1 having a fiber volume content of 60%. The reinforcing fiber fabric used was the plain weave CF6273H (fiber basis weight: 193 g/m$^2$) made of the carbon fiber "TORAYCA (registered trademark)" T700G-12K (number of fibers: 12000, tensile strength: 4.9 GPa, tensile modulus: 240 GPa, and tensile elongation: 2.1%) manufactured by Toray Industries, Inc.

The prepared prepregs 1 were stacked in a 2-ply symmetrical configuration of ($\pm$45°)/(0°/90°) and heated at a pressure of 0.30 MPa at 180°C for 2 hours in an autoclave.

The evaluation methods for the structure, the physical properties, and so forth in each of Examples and Comparative Examples are as follows.

[Evaluation of Reinforcing Fiber Length in Sheet Material]

The sheet material was pressed with heating at 350°C to obtain a film with a thickness of 50 $\mu$m. Four hundred reinforcing fibers in the film were randomly selected and their lengths were measured with an optical microscope to a unit of 1 $\mu$m to determine the fiber length and its ratio. The fiber length distribution was further evaluated by counting the number of the reinforcing fibers at 0.25 mm intervals, such as less than 0.25 mm, 0.25 mm or more and less than 0.5 mm, and 0.5 mm or more and less than 0.75 mm.

[Measurement of Two-dimensional Orientation Angle of Reinforcing Fibers in Sheet Material]

As illustrated in FIG. 2, the sheet material was sandwiched between two stainless steel meshes (plain weave shape with 50 meshes per 2.5 cm) and secured by adjusting screws to prevent the sheet material from moving. This was then heated at 500°C in air for 1 hour to burn off the resin component. After the stainless steel meshes were removed, the resulting reinforcing fiber base material was observed with a microscope, and one reinforcing monofilament was randomly selected, and then the two-dimensional orientation angle of the reinforcing monofilament that intersects with another reinforcing monofilament was measured by the image observation. The orientation angle used here was the angle in the range of 0° or more and 90° or less (the acute angle side) of the two angles formed by the two intersecting reinforcing monofilaments. The number of measurements of the two-dimensional orientation angle per one selected reinforcing monofilament was set to n=20. The same measurement was conducted for a total of five reinforcing monofilaments, and the average value thereof was determined as the two-dimensional orientation angle.

[Cover Factor of Sheet Material (%)]

Using the prepared sheet material, an image was photographed by an X-ray CT system that is set up in advance so as to distinguish "reinforcing fibers", "void portion", and "portion filled only with resin", and an area of S1 was set from the photographed image. Then, using the following formula, in the area S1, the area of the void portion formed by the reinforcing fibers or the area of the portion filled only with the resin with no reinforcing fibers present was set as S2 to calculate the cover factor. Measurement was conducted at 10 arbitrary locations in the sheet material, and the arithmetic average value was used as the cover factor.

$$\text{Cover Factor} = \{(S1 - S2)/S1\} \times 100$$

[Skin-Core Structural Body]

The skin-core structural body was fabricated according to the following procedures (1) to (2).

(1) Sample Stacking

As illustrated in FIG. 4, an adhesive film 14 (AF555 manufactured by 3M Corp.) and a skin material 12 (the outermost layer was $\pm$45° to the honeycomb core) were stacked to each of the top and bottom of the open end portion of a honeycomb core 13. In FIG. 4, the honeycomb core 13, the adhesive film 14, and the skin material 12 are depicted separately in order to clarify the structure of the skin-core structural body.

(2) Sample Molding

The following procedures (a) through (d) were conducted.

(a) The unmolded body having the honeycomb core 13 stacked with the adhesive film 14 and the skin material 12 is placed on an aluminum tool plate that is coated with a mold release agent.

(b) After the unmolded body was covered with a nylon film, this is placed in an autoclave with keeping inside of the nylon film (hereinafter this is referred to as "inside the system" in short) under a vacuum state.

(c) After the pressure in the autoclave is increased to 0.15 MPa, the pressure inside the system is returned to a normal pressure; then, after the pressure in the autoclave is increased to 0.30 MPa, the temperature is started to be raised.

(d) While the pressure in the autoclave is kept at 0.30 MPa until the molding is completed, the temperature is raised to 180°C at a rate of 1.5°C/min, and then this is allowed to be kept at 180°C for 2 hours to cure the resin and bond this to the honeycomb core; then, the temperature is lowered to room temperature at a rate of 2°C/min to obtain the skin-core structural body.

[Compression Strength]

The sample was cut out from the skin-core structural body described before and tested in accordance with MIL-STD-401 to determine the compression strength (tested under stabilized compression).

Hereinafter, the honeycomb core and the skin-core structural body that were fabricated in Examples and Comparative Examples will be explained.

[Example 1]

The skin-core structural body including the honeycomb core 1 and the skin material was fabricated by the method described above. The evaluation results are described in Table 1.

[Example 2]

The skin-core structural body including the honeycomb core 2 and the skin material was fabricated by the method described above. The evaluation results are described in Table 1.

[Example 3]

The skin-core structural body including the honeycomb core 3 and the skin material was fabricated by the method described above. The evaluation results are described in Table 1.

[Example 4]

The skin-core structural body including the honeycomb core 6 and the skin material was fabricated by the method described above. The evaluation results are described in Table 1.

[Comparative Example 1]

The results of the attempted fabrication of the honeycomb core 4 using the above method are described in Table 1.

[Comparative Example 2]

The skin-core structural body including the honeycomb core 5 and the skin material was fabricated by the method described above. The evaluation results are described in Table 1.

From the comparison of Examples 1 to 4 with Comparative Example 1, it is recognized that the honeycomb core according to the present invention may be produced smoothly even though it is the FRP honeycomb, because the reinforcing fibers in the base sheet material are in the state of monofilament, not in a bundle, thereby being in a highly dispersed state, resulting in improvement of the texture thereof. From the comparison of Examples 1 to 4 with Example 2, it can be seen that the honeycomb core according to the present invention has high mechanical properties while keeping a light weight property.

Table 1

| | | | Unit | Example 1 | Example 2 | Example 3 | Example 4 | Comparative Example 1 | Comparative Example 2 |
|---|---|---|---|---|---|---|---|---|---|
| Sheet base material | Two-dimensional orientation angle | | [°] | 40 | 40 | 25 | 40 | 2 | - |
| | Fiber length ratio | More than 10 mm | [% by weight] | 0 | 0 | 0 | 0 | 100 | - |
| | | 2 to 10 mm | [% by weight] | 95 | 95 | 95 | 95 | 0 | - |
| | | Less than 2 mm | % by weight] | 5 | 5 | 5 | 5 | 0 | - |
| | Cover factor | | % | 100 | 100 | 100 | 100 | 98 | - |
| Compression strength of honeycomb core | | | MPa | 3.0 | 2.9 | 2.8 | 3.1 | - | 2.2 |

Industrial Applicability

The core material according to the present invention may be suitably used as a structural member such as automotive interior and exterior materials, a solar cell reinforcement, a structural material for sporting goods, an aircraft interior material, a flying vehicle structural material, a satellite housing, and a transportation box body, as well as a structural member such as an aircraft maneuverable wing, an aircraft floor panel, a rocket fairing, and a rocket interstage portion.

Reference Signs List

1 Reinforcing monofilament
2 Reinforcing monofilament
3 Reinforcing monofilament
4 Reinforcing monofilament
5 Reinforcing monofilament
6 Reinforcing monofilament
7 Reinforcing monofilament
9 Stainless steel mesh
10 Sheet material
11 Reinforcing fiber base material
12 Skin material
13 Core material
14 Adhesive (film)
15 Cut-out cell wall (orthogonal plane to thickness direction)
16 Reinforcing monofilament
18 Cell column axis direction (0 degrees)
19 Reinforcing fiber (Cf)
20 Resin (Cr)
21 Reinforcing fiber (Cf)
22 Resin (Sr)
23 Penetration distance of reinforcing fiber (Cf) into skin material
$\theta$ Two-dimensional orientation angle

θ1 Average fiber orientation angle of reinforcing fibers (Cf) in in-plane direction of cell wall surface

**Claims**

1.  A core material having a structure comprising a collective body of hollow columnar cells compartmentally formed by cell walls, wherein the cell walls comprise a sheet material in which discontinuous reinforcing fibers (Cf) are dispersed in a monofilament form.

2.  The core material according to claim 1, wherein the sheet material comprises a reinforcing fiber base material impregnated with a resin (Cr), and a content of the discontinuous reinforcing fibers (Cf) in the sheet material is 10 to 60% by mass, and a void ratio, which is a portion not impregnated with the resin (Cr), is 5% or less.

3.  The core material according to claim 1, wherein an average fiber orientation angle in an in-plane direction of the reinforcing fibers (Cf) in the cell walls is 0° or more and 45° or less, relative to 0° as a cell column axis direction.

4.  The core material according to any one of claims 1 to 3, wherein an average value of two-dimensional orientation angles of the reinforcing fibers (Cf) in the sheet material is 10 to 80°, and an elastic modulus of the cell walls is 1 GPa or more.

5.  The core material according to any one of claims 1 to 3, wherein the reinforcing fibers (Cf) in the sheet material comprise 0 to 50% by mass of reinforcing fibers having a fiber length of more than 10 mm, 50 to 100% by mass of reinforcing fibers having a fiber length of 2 to 10 mm, and 1 to 50% by mass of reinforcing fibers having a fiber length of less than 2 mm.

6.  The core material according to any one of claims 1 to 3, wherein a distribution of fiber lengths of the reinforcing fibers (Cf) has at least two peaks.

7.  The core material according to claim 6, wherein the distribution of the fiber lengths of the reinforcing fibers (Cf) has the at least two peaks, one peak is in a range of 5 to 10 mm in fiber length, and another peak is in a range of 2 to 5 mm in fiber length.

8.  The core material according to any one of claims 1 to 3, wherein a cover factor of the reinforcing fibers (Cf) in the sheet material is 95% or more.

9.  The core material according to any one of claims 1 to 3, wherein the sheet material has, at 23°C, a thickness h0 (mm) of 0.02 to 1 mm and a tensile strength σ of 10 MPa or more.

10. The core material according to any one of claims 1 to 3, wherein a bulk density of the sheet material is 0.8 to 1.6 g/cm$^3$.

11. The core material according to any one of claims 1 to 3, wherein the reinforcing fibers (Cf) are carbon fibers.

12. 12. The core material according to any one of claims 1 to 3, wherein the hollow columnar cells have a plurality of polygonal shapes.

13. The core material according to any one of claims 1 to 3, wherein the resin (Cr) comprises at least one or more resins selected from the group consisting of a polyarylene sulfide resin, a polyetherimide resin, a polyethersulfone resin, a polysulfone resin, a polyarylene ether ketone resin, and a polyimide resin, and between the cell walls in the core material are welded together by the resin (Cr).

14. A skin-core structural body formed by bonding a skin material comprising a fiber-reinforced composite material to a core open surface of the core material according to any one of claims 1 to 3.

15. The skin-core structural body according to claim 14, wherein a burning time of the skin-core structural body after extinguishing an ignition source as measured in accordance with Advisory Circular (AC) 25.853-1a(1) i is 30 seconds or less, and a resin of the skin material comprises at least one or more resins selected from the group consisting of a polyarylene sulfide resin, a polyetherimide resin, a polyether sulfone resin, a polysulfone resin, a polyarylene ether ketone resin, a polyimide resin, an epoxy resin, a phenol resin, a cyanate ester resin, and a bismaleimide resin.

**16.** The skin-core structural body according to claim 14 or 15, wherein a heat resistance temperature Ts of a resin (Sr) included in the skin material and a heat resistance temperature Tc of a resin (Cr) of the sheet material included in the core material satisfy Ts $\leq$ Tc.

**17.** The skin-core structural body according to claim 14 or 15, wherein the skin-core structure has an interface layer where a resin (Cr) and a resin (Sr) are mingled.

**18.** The skin-core structural body according to claim 14 or 15, wherein The skin-core structural body has a structure in which the discontinuous reinforcing fibers (Cf) contained in the core material partially penetrates into the skin material.

**19.** An aircraft maneuverable wing, an aircraft floor panel, a rocket fairing, or a rocket interstage portion, comprising the core material according to any one of claims 1 to 3 as a structural member.

# FIG.1

# FIG.2

THICKNESS DIRECTION OF
SHEET BASE MATERIAL

(a)

9

9

10

BURN-OFF OF RESIN

(b)

9

9

11

# FIG.3

# FIG.4

# FIG.5

EP 4 488 050 A1

# FIG.6

## INTERNATIONAL SEARCH REPORT

| International application No. |
| --- |
| **PCT/JP2023/008191** |

**A.    CLASSIFICATION OF SUBJECT MATTER**

***B32B 3/12***(2006.01)i; ***B29C 70/18***(2006.01)i; ***B32B 5/28***(2006.01)i; ***B64C 1/00***(2006.01)i; ***B64G 1/22***(2006.01)i
FI:    B32B3/12 B; B64G1/22; B29C70/18; B32B5/28 A; B64C1/00 B

According to International Patent Classification (IPC) or to both national classification and IPC

**B.    FIELDS SEARCHED**

Minimum documentation searched (classification system followed by classification symbols)
B32B1/00-43/00; B29C70/00-70/88; B64C1/00; B64G1/22

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2014/103711 A1 (TORAY INDUSTRIES, INC.) 03 July 2014 (2014-07-03) claims, paragraphs [0061], [0072], [0134]-[0192], tables 1-4, fig. 1, examples | 1-19 |
| A | JP 2020-513351 A (EURO-COMPOSITES S.A.) 14 May 2020 (2020-05-14) entire text, all drawings | 1-19 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 May 2023** | **06 June 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**INTERNATIONAL SEARCH REPORT**
Information on patent family members

International application No.

**PCT/JP2023/008191**

| Patent document cited in search report | Publication date (day/month/year) | Patent family member(s) | Publication date (day/month/year) |
|---|---|---|---|
| WO 2014/103711 A1 | 03 July 2014 | US 2015/0266260 A1 claims, paragraphs [0090], [0101], [0153]-[0211], examples, fig. 1, tables 1-4 EP 2939818 A1 CN 104781065 A TW 201433459 A | |
| JP 2020-513351 A | 14 May 2020 | US 2019/0329512 A1 claims, examples, figures EP 3541614 A1 CN 110167750 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H04226745 A